# EUROPÄISCHE PATENTSCHRIFT

(11) **EP 1 359 633 B1**
(45) Veröffentlichungstag und Bekanntmachung des Hinweises auf die Patenterteilung: **30.09.2009**
(21) Anmeldenummer: 03008511.2
(22) Anmeldetag: 12.04.2003
(51) Int. Cl.: H01M 6/18, H01M 6/00, H01M 2/18, H01M 10/30

(54) **Galvanisches Element mit dünnen Elektroden**
Galvanic element with thin electrodes
Elément galvanique avec des électrodes minces

(30) Priorität: 02.05.2002 DE 10219424
(43) Veröffentlichungstag der Anmeldung: 05.11.2003
(73) Patentinhaber: VARTA Microbattery GmbH, 30419 Hannover (DE)
(72) Erfinder: Holl, Konrad, Dr., 73434 Aalen-Dewangen (DE); Joas, Alfons, 73479 Tannhausen (DE); Wagner, Horst, 73494 Rosenberg (DE); Ilic, Dejan, Dr., 73479 Ellwangen (DE); Müller, Roland, Dr., 79336 Herbolzheim (DE); Siefert, Wolfgang, Dr., 77955 Ettenheim (DE)
(74) Vertreter: Patentanwälte Ruff, Wilhelm, Beier, Dauster & Partner

(56) Entgegenhaltungen:
- WO-A-00/72394
- WO-A-01/97300
- WO-A-94/20996
- WO-A-97/33326
- GB-A- 2 357 896
- US-A- 5 460 904

## Beschreibung

Gegenstand der Erfindung ist ein galvanisches Element mit den Merkmalen des Oberbegriffs des Anspruchs 1. Das galvanische Element kann dünne Elektroden aufweisen in einem Gehäuse, das aus miteinander versiegelten Kunststofffolien gebildet ist.

Galvanische Elemente sind in verschiedenen Bauformen bekannt. Sie besitzen in den meisten Fällen ein mechanisch stabiles Gehäuse und beispielsweise die Form von Rund-, Knopf- oder prismatischen Zellen, in denen positive und negative Elektrode sowie ein Separator und der Elektrolyt angeordnet sind. Die Gehäuse von galvanischen Elementen mit alkalischem Elektrolyten wie z.B. Zn/MnO₂ oder Ni/MeH besitzen ein Gehäuse aus Stahl oder Edelstahllegierung, dessen äußere Oberflächen zur besseren Kontaktierung meist vernickelt sind.

Bei primären und sekundären Lithiumzellen bestehen die Gehäuse aufgrund des höheren Elektrodenpotentials von bis zu 4,2 Volt aus Edelstahl oder Aluminium, um Korrosion zu vermeiden, die zur Passivierung der Metalloberflächen und zur Bildung höherer Übergangskontaktwiderstände führt.

Bei geringen Anforderungen an die Belastbarkeit reicht der Anpressdruck der Elektroden an den leitfähigen Behälter als Kontaktierung meist aus. Soweit höhere Anforderungen an die Strombelastbarkeit gestellt werden, wie insbesondere bei Lithiumzellen, ist eine zusätzliche Kontaktierung in Form von metallischen Kollektoren innerhalb der Elektroden und eine Anbindung dieser Kollektoren durch Anschweißen von Ableiterfahnen an das Gehäuse notwendig.

Neben galvanischen Elementen mit mechanisch sehr stabilen Gehäusen sind auch Elemente bekannt, die Foliengehäuse besitzen. Derartige Foliengehäuse werden beispielsweise bei sogenannten Lithium/Polymer- bzw. Lithium/Ionen-Zellen verwendet. Diese Polymerzellen besitzen ein Gehäuse aus einer Verbundfolie, die beispielsweise aus Polyamid/Aluminium/Polypropylen besteht. Durch die Verwendung dieser Folien wird eine hohe Flexibilität des Designs, ein niedriges Gewicht und eine hohe Sicherheit erreicht. Die Aluminiumschicht in diesen Verbundfolien dient dabei als Gassperre.

Der Nachteil solcher Verbundfolien liegt darin, dass die Folie im Gegensatz zu einem metallischen Gehäuse keine elektrische Leitfähigkeit besitzt. Deswegen müssen an die Ableitergerüste der Elektroden Ableitfahnen angeschweißt und nach außen geführt werden. Das Kontaktieren der Ableitergerüste mit Ableitfahren kann an Stelle von Verschweißung auch durch Verklebung erfolgen, wie es in der WO 97/33326 beschrieben ist.

Galvanische Elemente dieser Art enthalten im Allgemeinen einen Zellenstapel, der aus vielen Einzelzellen bzw. Einzelelementen aufgebaut ist. Das Einzelelement ist ein Laminat, das aus Ableiter, aktivem Elektrodenfilm und Separator erzeugt wird. Derartige Laminate aus fest verbundenen Einzelteilen werden beispielsweise als sogenannte Bizellen mit den möglichen Sequenzen negative Elektrode/Separator/positive Elektrode/Separator/negative Elektrode oder positive Elektrode/Separator/negative Elektrode/Separator/positive Elektrode hergestellt.

Der US-PS 5,460,904 ist ein Verfahren zur Herstellung von solchen Lithium/lonenbatterie zu entnehmen. Bei diesem Verfahren werden aktive Materialien und Zusätze, wie gegebenenfalls Leitfähigkeitsverbesserer in den Elektroden oder Stabilisatoren im Separator, ein spezielles Copolymer, Polyvinylidendifluorid-Hexafluorpropylen (PVDF-HFP) sowie Anteile eines Weichmachers, typischerweise Dibuthylphthalat (DBP), nach Hinzugabe von Aceton zum Lösen des Copolymers intensiv gemischt und zu einer Folie ausgezogen. Die so gebildeten Elektrodenfolien und Separatorfolien werden in mehreren Laminationsprozessen zu Bizellen verarbeitet. Mehrere Bizellen werden zu einem Stapel aufgeschichtet. Der Stapel wird nach Einlegen in einen Behälter aus beispielsweise tiefgezogener Aluminiumverbundfolie, Befüllen mit Elektrolyt, Versiegeln mit einem Deckel, Formation und Endverschluss zu einer fertigen Batterie verarbeitet.

Die einzelnen Elektroden besitzen dabei Ableitgerüste in Form einer Kupferfolie für die negative Elektrode und in Form von Aluminium für die positive Elektrode, die jeweils Ableiterfahnen besitzen. Über die Ableiterfahnen werden mehrere Elektroden parallel geschaltet und aus dem Verbund zur äußeren Kontaktierung durch das Gehäuse durchgeführt. Zur ausreichenden Kontaktierung der einzelnen Elektroden sind daher viele Komponenten notwendig. Außerdem ist die Abdichtung des Gehäuses um diese Ableitfahnen herum aufwendig.

Der Erfindung liegt die Aufgabe zugrunde, ein galvanisches Element der eingangs genannten Art zu schaffen, das einfach und kostengünstig hergestellt werden kann, und bei dem insbesondere die Kontaktierung zwischen Elektrode und äußerem Ableiter verbessert ist.

Erfindungsgemäß wird diese Aufgabe bei einem galvanischen Element der eingangs genannten Gattung durch die Merkmale des Anspruchs 1 gelöst. In den Unteransprüchen sind vorteilhafte Ausgestaltungen der Erfindung angegeben. Der Wortlaut der Ansprüche wird durch ausdrückliche Bezugnahme zum Inhalt der Beschreibung gemacht.

Dadurch, dass gemäß der Erfindung die Oberfläche einer Kunststofffolie oder einer Kunststoffverbundfolie oder Kunststoffmetallverbundfolie, welche das Zellengehäuse bildet, teilweise metallisiert wird, lässt sich der Zellenaufbau erheblich vereinfachen. Durch entsprechende Formgebung der Metallisierung und die dadurch mögliche innere Anbindung der Elektroden an diese Metallisierung kann dieser Aufbau auch bei höheren Strombelastungen verwendet werden. Er ist jedoch insbesondere für geringere Strombelastungen geeignet.

Vorteilhaft ist es, wenn diese Metallisierung der Kunststofffolie, die das Gehäuse des galvanischen Elements bildet, auch außerhalb des eigentlichen Zellengehäuses in Form von Leiterbahnen fortgesetzt werden kann.

Die aktiven Zellenbestandteile sind zwischen zwei zusammengesiegelten Kunststofffolien angeordnet, wobei diese Kunststofffolien auch Verbundfolien mit einer inneren Metallschicht, beispielsweise einer Aluminiumschicht, sein können. Die Metallisierung auf der der Elektrode zugewandten Seite kann als Flächenmuster oder mit Unterbrechungen der Metallisierung ausgebildet sein. Im Bereich des nach außen führenden Ableiters kann die Metallisierung verstärkt sein durch Aufbringung einer zusätzlichen Metallschicht oder durch Aufbringung einer weiteren Metallfolie. Es ist auch möglich, die beiden das Zellengehäuse bildenden Kunststofffolien nicht direkt miteinander zu versiegeln, sondern zwischen den beiden Folien als Hilfsmittel einen Siegelrahmen zu verwenden.

Darüber hinaus kann eine der Kunststofffolien oder insbesondere der Kunststoffmetallverbundfolien durch einen Tiefziehvorgang vorgeformt werden. Besonders zweckmäßig ist es, das Gehäuse des galvanischen Elements aus zwei miteinander versiegelten Kunststofffolien zu bilden. Diese sind auf ihrer in das Zelleninnere weisenden Seite derart metallisiert, dass die Metallisierung einerseits den elektrischen Kontakt mit den Elektroden und andererseits die äußeren Kontaktfahnen der Elektroden des galvanischen Elements bildet.

Im Folgenden ist der Gegenstand der Erfindung anhand der Figuren näher erläutert. In den Figuren zeigen schematisch:
- Figur 1: einen Schnitt durch ein erfindungsgemäßes galvanisches Element längs der Linie A-A in Figur 2,
- Figur 2: eine Draufsicht auf ein solches Element,
- Figur 3: eine weitere Ausgestaltung eines erfindungsgemäßen galvanischen Elements,
- Figur 4: den Aufbau und die Einzelteile eines galvanischen Elements gemäß der Erfindung,
- Figur 5: die Anordnung zusätzlicher Leiterbahnen im Zusammenhang mit einem erfindungsgemäßen Element,
- Figur 6 und 7: die Ausbildung der Metallisierung auf dem Kunststoffmaterial bzw. Kunststoffverbundmaterial und
- Figur 8: eine vorgeformte tiefgezogene Kunststoffmetallverbundfolie mit erfindungsgemäßer Metallisierung.

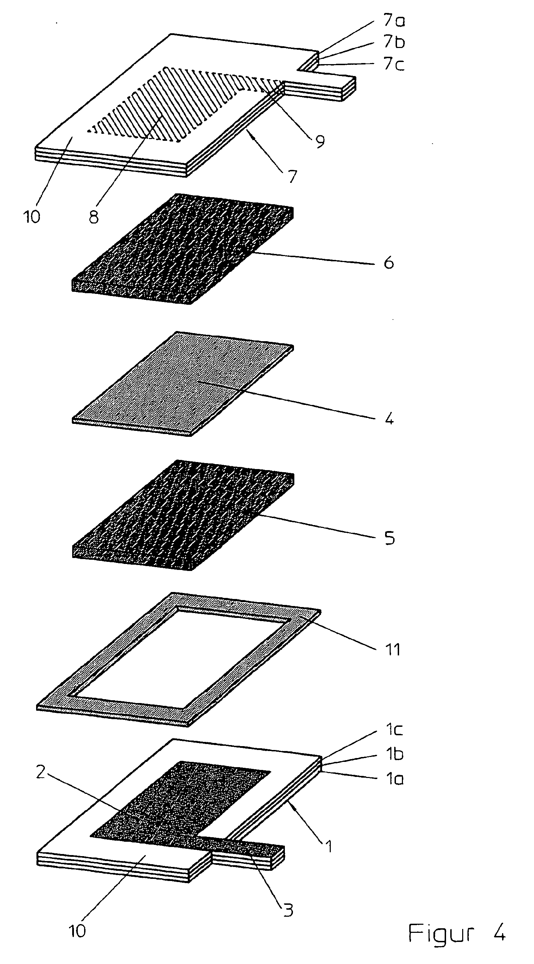

Wie insbesondere Figur 4 zeigt, besteht ein erfindungsgemäßes galvanisches Element aus einer ersten Kunststofffolie 1, die partiell mit einer Metallisierung 2 versehen ist, und einer zweiten Kunststofffolie 7, die ebenfalls mit einer Metallisierung 8 versehen ist. Die das Gehäuse bildenden Folien 1 bzw. 7 können dabei Kunststofffolien sein. Sie sind vorzugsweise Kunststoffmetallverbundfolien mit einer inneren Aluminiumschicht, sodass eine hohe Wasserdampfsperre und niedrige Gasdiffusionsrate erreicht werden. Eine solche Verbundfolie besteht beispielsweise aus einer äußeren Polyamidschicht 1 a, 7a, einer mittleren Aluminiumschicht 1b, 7b und einer inneren Polypropylenschicht 1c, 7c, welche jeweils die der Form der Elektrode angepassten Metallisierung trägt. Beispielsweise werden die Folien mittels einer Vakuumbeschichtung auf der Polypropylenseite partiell metallisiert. Die Fläche der Metallisierung ist dabei insbesondere etwas kleiner oder praktisch gleich der Größe der Elektroden 5 und 6.

Die positive Elektrode 5 kann beispielsweise eine MnO₂ oder LiCoO₂ - Elektrode oder eine LiₓMnO₂ -Elektrode sein. Die negative Elektrode 6 kann aus Lithiummetall, einer Lithiummetall-Legierung, bestehen oder eine Lithium-interkalierende Graphitelektrode sein. Der Separator 4 ist beispielsweise eine Polypropylenfolie, Polyethylenfolie oder ein Vlies aus diesen Materialien.

Nach dem Zuordnen der in Figur 4 dargestellten Halbteile und Zugabe eines organischen Elektrolyten werden die Verbundfolien 1 und 7 unter Vakuum in der nichtmetallisierten Dichtungszone 10 und über der Durchführung der Kontakte thermisch versiegelt. Alternativ werden sie miteinander mittels eines als Siegelrahmen ausgebildeten Schmelzklebers 11 verklebt.

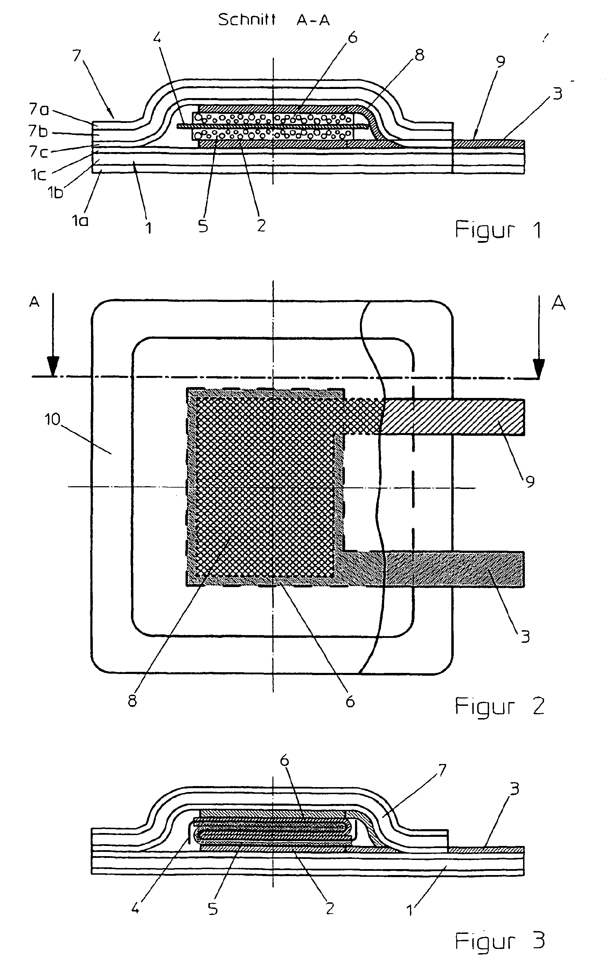

Den Querschnitt durch eine solche fertige Zelle zeigt Figur 1. Die Ableiterfahnen 3 bzw. 9, die mit der Metallisierung 2 bzw. 8 in Verbindung stehen, bilden die äußeren Stromableiter der Zelle. Dies ist aus Figur 2 ersichtlich, die die gleiche Zelle in teilweise geschnittener Draufsicht zeigt.

Die Ausführungsform eines galvanischen Elements gemäß Figur 3 unterscheidet sich von der Ausführungsform gemäß Figur 1 im wesentlichen dadurch, dass hier ein gefaltetes Elektrodenpaket verwendet wird. Dieses besteht aus Anode 5 und Kathode 6 mit zwischenliegendem Separator 4.

Besonders vorteilhaft ist es, dass bei Verwendung von Polymerelektroden, wie sie eingangs erläutert wurden, diese Elektroden, die beispielsweise aus den aktiven Materialien und PVDF als Binder bestehen, diese direkt auf die metallisierten Verbundfolien als Träger auflaminiert werden können. Bei Verwendung so hergestellter Elektroden in einer Anordnung gemäß Figur 3, bei der anstelle eines Stapels von Elektroden, eine gefaltete Elektrode Anwendung findet, ist es möglich, die Zelle auch mit höheren Strömen zu belasten.

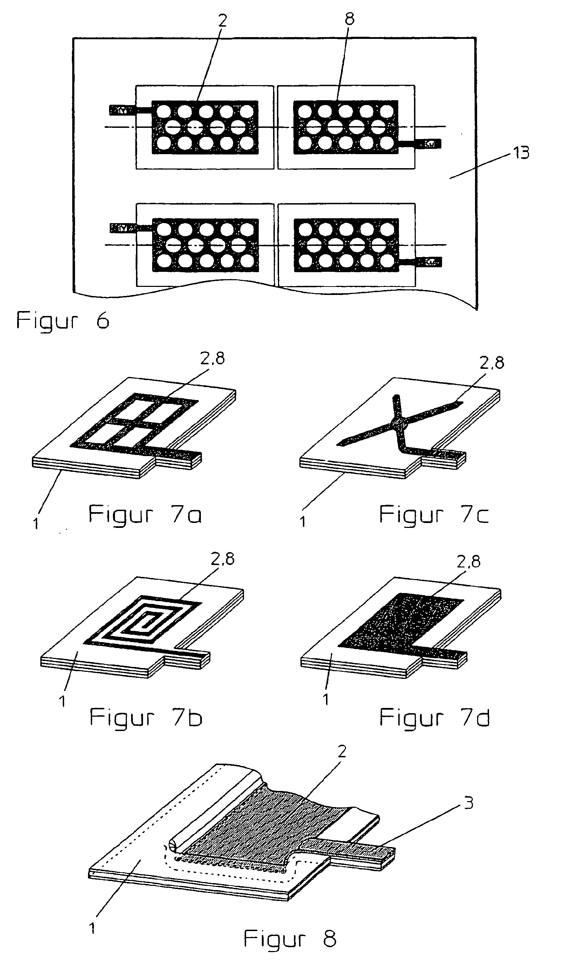

Die Metallisierung der Folien, die bereichsweise erfolgt, kann großflächig oder auch in Form eines Musters ausgeführt werden, wie dies den Figuren 7a bis 7d zu entnehmen ist. Figur 6 zeigt dabei die Anordnung der Metallisierungen auf einem Kunststoffverbundband 13. Dabei sind die Bereiche 2 mit Aluminium und die Bereiche 8 mit Kupfer metallisiert.

Wenn die Metallisierung nicht vollflächig ausgeführt ist, so kann bei Verwendung von Elektroden, die auf eine Metallfolie aufgebracht oder laminiert sind, diese Metallfolie durch thermisches Aufsiegeln mit den freien, nichtmetallisierten Bereichen der Kunststoffverbundfolie verbunden werden. So verbessert sich die Kontaktierung von Metallfolieableiter der Elektrode und Metallisierung der Verbundfolie.

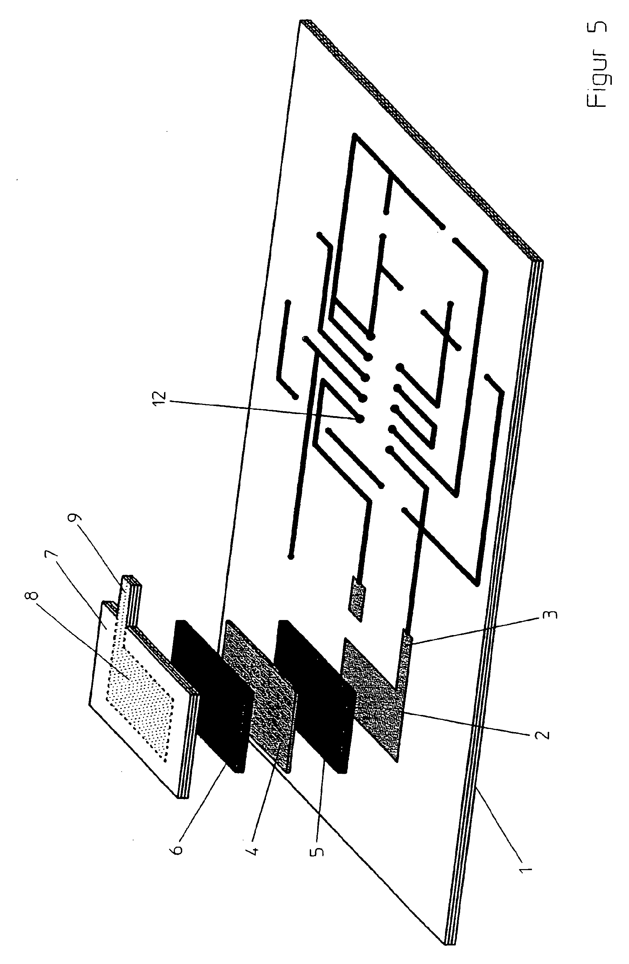

Wie in Figur 5 dargestellt, kann mindestens eine der Kunststofffolien oder Kunststoffmetallverbundfolien gleichzeitig der Träger von Leiterbahnen 12 für weitere elektronische Bausteine sein. Dabei wird diese Metallisierung gleichzeitig mit der Metallisierung der Kollektorfläche im Zellengehäuses aufgebracht. Die Kollektorflächen 2 und 8 und die Leiterbahnen 12 können mittels Vakuumbeschichtung, durch stromlose oder galvanische Metallabscheidung oder durch Bedrucken mittels leitfähiger Pasten aufgebracht werden. Die mittels Vakuumbeschichtung, stromloser oder galvanischer Metallabscheidung aufgebrachten Kollektorflächen 2 und 8 und die Leiterbahnen 12 können über Maskentechnik direkt strukturiert erzeugt werden. Alternativ dazu kann auch die Metallisierung jeweils vollflächig erfolgen. Dabei wird die jeweilige Struktur mittels Laserablation oder konventioneller Photolithographie in Verbindung mit chemischer Ätztechnik oder Plasmaätzen hergestellt.

Es ist besonders vorteilhaft, eine erfindungsgemäß hergestellte Zelle in einer sogenannten Smart-Card, wie sie beispielsweise in der DE 101 02 125 A1 beschrieben ist, zu verwenden. Die innerhalb der Verbundfolie angeordnete Metallschicht kann aus Aluminium, Kupfer oder Nickel als Dampf- oder Gasdiffusionssperre bestehen. Es kann vorteilhaft sein, insbesondere die Dicke der Ableiterfahnen 3 und 9 durch einen zusätzlichen Metallisierungsschritt zu erhöhen oder diese Bereiche mit einer zusätzlichen Metallfolie zu verstärken. Die Kunststofffolie bzw. Kunststoffmetallverbundfolie besitzt eine Dicke von 5 bis 400 µm, insbesondere eine Dicke von 10 bis 150 µm. Die Metallisierung, die auf diese Verbundfolie aufgebracht wird, besitzt eine Dicke von 0,02 bis 30 µm, vorzugsweise eine Dicke von ca. 0,1 bis 5 µm.

Es ist insbesondere vorteilhaft, mindestens eine der Kunststofffolien bzw. Kunststoffmetallverbundfolien durch einen Tiefziehvorgang so vorzuformen, dass eine Aufnahme für eine Elektrode oder den Elektrodensatz mit Separator entsteht. Dies ist in Figur 8 dargestellt.

## Patentansprüche

1. Galvanisches Element mit dünnen Elektroden (5, 6) in einem Gehäuse, wobei das Gehäuse aus miteinander versiegelten Kunststofffolien (1, 7) gebildet ist, **dadurch gekennzeichnet, dass** zumindest eine der Kunststofffolien (1, 7) auf einer Seite, welche einer der Elektroden zugewandt ist, in Teilbereichen derart metallisiert ist, dass die Metallisierung (2, 8) einerseits einen elektrischen Kontakt mit dieser Elektrode und andererseits eine äußere Kontaktfahne (3, 9) dieser Elektrode bildet.

2. Galvanisches Element nach Anspruch 1, **dadurch gekennzeichnet, dass** zumindest eine der Kunststofffolien (1, 7) eine Verbundfolie ist mit einer inneren Metallfolie (1b, 7b), die beidseitig von Kunststofffolie (1a, 1c, 7a, 7c) abgedeckt ist.

3. Galvanisches Element nach Anspruch 1 oder 2, **dadurch gekennzeichnet, dass** die Metallisierung (2, 8) der Kunststofffolie (1, 7) in einem Bereich, der außerhalb des Umrisses des Elements liegt, als Leiterbahnen (12) ausgebildet ist.

4. Galvanisches Element nach einem der vorhergehenden Ansprüche, **dadurch gekennzeichnet, dass** eine zu einem Inneren des Elements weisende Seite der Kunststofffolie (1, 7) aus einem thermisch siegelfähigen und/oder verklebbaren Polymer besteht.

5. Galvanisches Element nach einem der vorhergehenden Ansprüche, **dadurch gekennzeichnet, dass** die Metallisierung (2, 8) auf der Kunststofffolie (1, 7), insbesondere der Kunststoffverbundfolie, als Flächenmuster mit Unterbrechungen der Metallisierung ausgebildet ist.

6. Galvanisches Element nach einem der vorhergehenden Ansprüche, **dadurch gekennzeichnet, dass** die Metallisierung (2, 8) im Bereich der äußeren Kontaktfahne (3, 9) durch Aufbringen einer zusätzlichen Metallschicht oder einer Metallfolie verstärkt ist.

7. Galvanisches Element nach einem der vorhergehenden Ansprüche, **dadurch gekennzeichnet, dass** das Gehäuse aus zwei miteinander versiegelten Kunststofffolien (1, 7) gebildet ist, die auf ihrer in das Innere des Elements weisenden Seite derart metallisiert sind, dass die Metallisierung (2, 8) einerseits den elektrischen Kontakt mit den Elektroden (5, 6) und andererseits die äußeren Kontaktfahnen der Elektroden oder des galvanischen Elements bildet.

8. Galvanisches Element nach einem der vorhergehenden Ansprüche, **dadurch gekennzeichnet, dass** auf die Kunststofffolie (1, 7) im Bereich der nicht metallisierten versiegelten Fläche ein Siegelrahmen aufgebracht ist.

9. Galvanisches Element nach einem der vorhergehenden Ansprüche, **dadurch gekennzeichnet, dass** mindestens eine der Kunststofffolien (1, 7) durch einen Tiefziehvorgang vorgeformt ist.

10. Galvanisches Element nach einem der vorhergehenden Ansprüche, **dadurch gekennzeichnet, dass** die Kunststofffolien (1, 7), insbesondere als Kunststoffverbundfolien, eine Dicke von 5 µm bis 400 µm, insbesondere von 10 µm bis 150 µm, aufweisen, und dass die Metallisierung (2, 8) der Kunststoffverbundfolien eine Dicke von 0,02 µm bis 30 µm, vorzugsweise eine Dicke von 0,1 µm bis 5 µm, besitzt.

## Claims

1. A galvanic element with thin electrodes (5, 6) in a housing, the housing being formed from plastic sheets (1, 7) that are connected to one another, **characterised in that** at least one of the plastic sheets (1, 7), on a side facing one of the electrodes, is metallised in such a way that a metallisation (2, 8) on the one hand provides an electrical contact to said electrode and on the other hand forms an electrical contact lug (3, 9) of said electrode.

2. The galvanic element according to claim 1, **characterised in that** at least one of the plastic sheets (1, 7) is made up of a composite sheet with an inner metal sheet (1 b, 7b), with the inner metal sheet being covered by plastic sheets (1 a, 1 c, 7a, 7c) on both sides.

3. The galvanic element according to claim 1 or 2, **characterised in that** said metallisation (2, 8) of the plastic sheets (1, 7) is formed in a location outside of the element perimeter in the form of conductor tracks (12).

4. The galvanic element according to any of the preceding claims, **characterised in that** one side of one of the plastic sheets (1, 7) facing the interior of the element is composed of a thermally sealable and/or adhesively bondable polymer.

5. The galvanic element according to any of the preceding claims, **characterised in that** said metallisation (2, 8) of the plastic sheets (1, 7), in particular the plastic composite sheet, is in the form of a surface pattern with interruptions in the metallisation.

6. The galvanic element according to any of the preceding claims, **characterised in that** said metallisation (2, 8) is reinforced in the vicinity of the outer electrical contact lugs (3, 9) by applying an additional metal layer or a metal film.

7. The galvanic element according to any of the preceding claims, **characterised in that** said housing is formed from two plastic sheets (1, 7) which are connected to one another and on the side facing the interior of the element are metallised in such a way that said metallisation (2, 8) on the one hand provides an electrical contact to said electrodes (5, 6) and on the other hand forms outer electrical contact lugs of said electrodes or of the galvanic element.

8. The galvanic element according to any of the preceding claims, **characterised in that** the plastic sheet (1, 7) is provided with a sealing frame in the vicinity of a non-metallised sealed area.

9. The galvanic element according to any of the preceding claims, **characterised in that** at least one of the plastic sheets (1, 7) is produced by a thermoforming process.

10. The galvanic element according to any of the preceding claims, **characterised in that** said plastic sheets (1, 7), in particular in the form of plastic composite sheets, have a thickness from 5 µm to 400 µm, in particular from 10 µm to 150 µm, and **in that** said metallisation (2, 8) of the plastic composite sheets has a thickness from 0.02 µm to 30 µm, in particular a thickness from 0,1 µm to 5 µm.

## Revendications

1. Elément galvanique à électrodes minces (5, 6) placées dans un boîtier, le boîtier étant formé de feuilles (1, 7) en matière synthétique scellées les unes sur les autres,
**caractérisé en ce que**
des parties du côté tourné vers les électrodes d'au moins l'une des feuilles (1, 7) en matière synthétique sont métallisées et
**en ce que** la métallisation (2, 8) forme d'une part un contact électrique avec cette électrode et d'autre part une patte extérieure de contact (3, 9) de cette électrode.

2. Elément galvanique selon la revendication 1, **caractérisé en ce qu'**au moins l'une des feuilles (1, 7) en matière synthétique est une feuille composite qui présente une feuille métallique intérieure (1b, 7b) recouverte sur ses deux faces par une feuille (1a, 1c, 7a, 7c) de matière synthétique.

3. Elément galvanique selon les revendications 1 ou 2, **caractérisé en ce que** dans la partie située à l'extérieur du périmètre de l'élément, la métallisation (2, 8) de la feuille (1, 7) en matière synthétique est configurée comme piste conductrice (12).

4. Elément galvanique selon l'une des revendications précédentes, **caractérisé en ce qu'**une feuille (1, 7) en matière synthétique située du côté tourné vers l'intérieur de l'élément est constituée d'un polymère apte à être scellé thermiquement et/ou à être collé.

5. Elément galvanique selon l'une des revendications précédentes, **caractérisé en ce que** la métallisation (2, 8) appliquée sur la feuille (1, 7) en matière synthétique et en particulier sur la feuille composite en matière synthétique est configurée comme motif plat qui présente des interruptions de la métallisation.

6. Elément galvanique selon l'une des revendications précédentes, **caractérisé en ce que** dans la zone occupée par les pattes extérieures de contact (3, 9), la métallisation (2, 8) est renforcée par application d'une couche métallique supplémentaire ou d'une feuille métallique.

7. Elément galvanique selon l'une des revendications précédents, **caractérisé en ce que** le boîtier est formé de deux feuilles (1, 7) en matière synthétique scellées l'une sur l'autre et métallisées sur le côté tourné vers l'intérieur de l'élément et **en ce que** la métallisation (2, 8) forme d'une part le contact électrique avec les électrodes (5, 6) et d'autre part les pattes extérieures de contact des électrodes ou de l'élément galvanique.

8. Elément galvanique selon l'une des revendications précédentes, **caractérisé en ce que** dans la partie occupée par la surface scellée et non métallisée, un cadre de scellement est appliqué sur le feuille (1, 7) en matière synthétique.

9. Elément galvanique selon l'une des revendications précédentes, **caractérisé en ce qu'**au moins l'une des feuilles (1, 7) en matière synthétique est préformée par une opération d'emboutissage.

10. Elément galvanique selon l'une des revendications précédentes, **caractérisé en ce que** les feuilles (1, 7) en matière synthétique, en particulier lorsqu'elles sont configurées comme feuilles composites en matière synthétique, ont une épaisseur de 5 µm à 400 µm et en particulier de 10 µm à 150 µm et **en ce que** la métallisation (2, 8) des feuilles composites en matière synthétique a une épaisseur de 0,02 µm à 30 µm et de préférence une épaisseur de 0,1 µm à 5 µm.
